# FASCICULE DE BREVET EUROPEEN

(11) **EP 3 233 453 B1**
(45) Date de publication et mention de la délivrance du brevet: **22.05.2019**
(21) Numéro de dépôt: 15825809.5
(22) Date de dépôt: 13.12.2015
(51) Int. Cl.: B29D 30/00

(54) **PROCÉDÉ DE POSE DE SUPPORT COMPRENANT UN MODULE ÉLECTRONIQUE DE PNEUMATIQUE**
VERFAHREN ZUR INSTALLATION EINER HALTERUNG UMFASSEND EIN ELEKTRONISCHES REIFENMODUL
METHOD FOR INSTALLING A MOUNTING COMPRISING AN ELECTRONIC TYRE MODULE

(30) Priorité: 15.12.2014 FR 1402853
(43) Date de publication de la demande: 25.10.2017
(73) Titulaire: Compagnie Générale des Etablissements Michelin, 63000 Clermont-Ferrand (FR)
(72) Inventeur: DESTRAVES, Julien, F-63040 Clermont-Ferrand Cedex 9 (FR); ROBERT, Michel, F-63040 Clermont-Ferrand Cedex 9 (FR)
(74) Mandataire: Roussy, Delphine
(86) Numéro de dépôt international: PCT/IB2015/002329
(87) Numéro de publication internationale: WO 2016/097837

(56) Documents cités:
- DE-A1- 3 046 572
- DE-A1- 3 046 625
- DE-A1- 10 255 138
- US-A- 4 684 431
- US-A1- 2007 246 151
- US-A1- 2013 126 063
- US-A1- 2014 174 621
- US-A1- 2014 261 944
- US-B1- 6 477 894

## Description

### DOMAINE TECHNIQUE DE L'INVENTION

La présente invention concerne un procédé de pose de support ou patch comprenant un module électronique contre une paroi d'un pneumatique.

### ETAT DE LA TECHNIQUE ANTERIEURE

De manière générale, on connaît des pneumatiques pourvus de modules électroniques destinés à remplir certaines fonctions telles que la surveillance de la pression, de la température et de diverses autres données. De tels modules sont la plupart du temps fixés au pneumatique par l'entremise d'un patch disposé contre une paroi du pneumatique.

La fixation de ce patch est classiquement réalisée lors d'une étape ultérieure à la fabrication du pneumatique. Cette opération est source de plusieurs inconvénients.

Certains inconvénients sont tout d'abord liés au procédé propre à la pose du patch sur le pneumatique. Le temps d'immobilisation du pneumatique constitue un premier inconvénient. En effet la surface de la paroi du pneumatique sur laquelle le patch est destiné à être posé doit tout d'abord être préparée, puis la pose elle-même effectuée. Enfin il est nécessaire d'immobiliser le pneumatique durant un laps de temps important, notamment afin de s'assurer que le collage soit effectif et durable.

Le fait d'effectuer une opération de pose après le moulage du pneumatique représente un coût important du fait du matériel mis en oeuvre et de la main d'oeuvre requise.

Enfin la fixation d'un patch sur un pneumatique doit être effectuée par un positionnement précis notamment au niveau de l'azimutage.

D'autres difficultés liées à l'objet même du pneumatique équipé d'un tel patch sont observables. Par exemple, la pose d'un patch sur un pneumatique est susceptible de révéler une rupture de ligne, ou encore des défauts potentiels liés à l'opération de collage.

La bonne tenue du collage dans le temps doit enfin pouvoir être assurée afin d'éviter tout risque inhérent à un éventuel décollage.

De plus, certains produits utilisés lors de la pose du patch sur le pneumatique peuvent s'avérer néfastes pour le pneumatique.

Le document US2007246151 décrit un pneumatique dans lequel une antenne est intégrée dans la zone basse d'un des flancs.

Les solutions révélées par l'état de la technique présentent certaines imperfections quels que soient leurs agencements. Il subsiste par conséquent un besoin pour une solution efficace permettant de gérer différentes fonctions inhérentes aux modules électroniques de pneumatique, en relation avec des données d'identification.

Pour pallier ces différents inconvénients, l'invention prévoit différents moyens techniques.

### EXPOSE DE L'INVENTION

Tout d'abord, un premier objet de l'invention consiste à prévoir une approche permettant de simplifier la fixation de modules électroniques sur des pneumatiques.

Un autre objet consiste à prévoir une approche permettant d'éviter les difficultés liées au repérage/azimutage pour positionnement lors de la pose d'un module électronique sur un pneumatique.

Encore un autre objet consiste à prévoir un mode de fixation de modules électroniques sur des pneumatiques supprimant les risques de décollement.

Encore un autre objet consiste à prévoir un mode de fixation de modules électroniques sur des pneumatiques supprimant l'utilisation de solvant sur les parois des pneumatiques.

Pour ce faire, l'invention prévoit un procédé selon la revendication 1.

Un tel procédé permet de fabriquer des pneumatiques avec patch intégré, selon un agencement optimal. Le patch étant directement obtenu avec le pneumatique, il n'est plus nécessaire d'immobiliser ce dernier pour effectuer des opérations de préparation et de pose. Le maintien du patch est assuré et les risques de décollement sont pratiquement supprimés.

Avec un module électronique disposé dans le support avant moulage, toutes les opérations liées à l'intégration du module au pneumatique peuvent être effectuées avant la fin du processus de fabrication du pneumatique, évitant ainsi de devoir immobiliser ce dernier ultérieurement.

Selon l'invention, une contre-forme comportant un profil correspondant à celui du support à mouler est disposée dans la cavité de moulage. Cette contre-forme est agencée de façon amovible.

De manière avantageuse, le support non-vulcanisé est mis en forme directement dans la contre-forme.

En variante, le support non-vulcanisé est partiellement réticulé préalablement à son insertion dans la cavité.

Selon un mode de réalisation avantageux, le support non-vulcanisé est préformé, par exemple par estampage, préalablement à son insertion dans la cavité.

Selon un autre mode de réalisation, le support non-vulcanisé est mis en forme directement dans la contre-forme.

Selon encore un mode de réalisation avantageux, le support non-vulcanisé est mis en forme par injection d'une composition élastomère.

Selon encore une autre variante, le support non-vulcanisé est mis en forme par assemblage d'éléments partiellement réticulés, d'au moins un module électronique et d'une composition élastomère.

### DESCRIPTION DES FIGURES

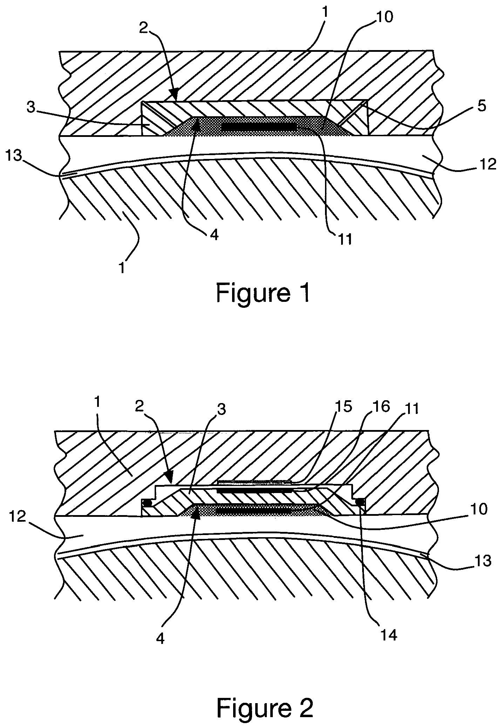

Tous les détails de réalisation sont donnés dans la description qui suit, complétée par les figures 1 et 2, présentées uniquement à des fins d'exemples non limitatifs, et dans lesquelles :
- la figure 1 est une vue en coupe d'un moule pourvu d'une contre-forme pour le moulage d'un patch simultanément avec le pneumatique auquel il est destiné ;
- la figure 2 est une vue en coupe d'une variante de réalisation du moule de la figure 1 pour le moulage d'un patch simultanément avec le pneumatique auquel il est destiné.

### DESCRIPTION DETAILLEE DE L'INVENTION

Dans le présent document, on entend par «support non-vulcanisé » un support ou patch réalisé à l'aide d'une composition élastomère, prévu pour insertion dans une cavité de moulage spécifiquement aménagée dans le moule du pneumatique. Le support non-vulcanisé et/ou la cavité de moulage, ou tout autre élément intermédiaire, sont préférentiellement prévus avec les formes et dimensions auxquelles le patch doit être réalisé.

Le concept selon l'invention consiste à effectuer la pose du support ou patch dans le moule de finition du pneumatique avant la vulcanisation de ce dernier.

Deux méthodes peuvent être envisagées, à savoir avec ou sans élément de moule amovible.

### MOULAGE DANS UNE CAVITE SANS ELEMENT DE MOULE AMOVIBLE

Tel que montré à la figure 1, un moule 1 selon l'invention comporte une cavité 2 pratiquée au niveau de sa paroi interne. Une contre-forme 3 adaptée est logée dans la cavité 2. Un module électronique 11 est disposé dans le support 10, avant le moulage et la vulcanisation du pneumatique. Dans un mode de réalisation préférentiel, la contre-forme 3 est rapportée dans la cavité 4. Cette contre-forme 3 est configurée avec un profil 4 correspondant (ou profil inverse) à celui du patch 10. Un ou plusieurs orifices 5 de ventilation sont avantageusement prévus. Dans l'exemple illustré, les orifices de ventilation 5 relient le support 10 à mouler au moule 1.

La figure 1 montre par ailleurs une portion de pneumatique 12 contre laquelle le patch sera intégré. De façon classique, le pneumatique est maintenu, du côté opposé au patch 10, par une membrane 13 et la portion interne du moule 1.

### MOULAGE DANS UNE CAVITE COMPORTANT UN ELEMENT DE MOULE AMOVIBLE

Selon ce mode de réalisation, un élément de moule amovible ou contre-forme 3 est prévu dans la cavité 2 du moule 1. L'élément de moule amovible présente l'avantage de permettre d'effectuer une mise en place des éléments constituants le patch 10 hors du moule 1 du pneumatique, facilitant ainsi les manipulations à mettre en oeuvre.

La figure 2 illustre une variante de réalisation dans laquelle des aimants 15 et 16 sont prévus entre la contre-forme 3 et le moule 1. Dans l'exemple illustré, un aimant 16 est agencé au dos de la contre-forme 3, et un second aimant 15, de signe opposé, est agencé contre la paroi correspondante du moule 1. Ces aimants facilitent la mise en place de la contre-forme 3 dans le moule 1. En variante, un seul aimant 15 ou 16 est prévu. Un joint d'étanchéité 14 permet par ailleurs d'assurer l'étanchéité de la zone libre entre la contre-forme 3 et la cavité 2 du moule.

### SPECIFICITES DU PATCH

Indépendamment de la variante de moule utilisé, les éléments mis en oeuvre pour la mise en forme du patch 10 peuvent être préformés (par exemple par estampage) avant leur mise en place, ou mis en forme par injection d'une composition élastomère.

La mise en forme peut aussi être effectuée par assemblage d'éléments partiellement réticulés, d'au moins un module électronique et/ou d'une composition élastomère.

Selon la fonction du ou des modules électroniques 11 insérés dans le patch 10, ce dernier, et par conséquent l'empreinte ou cavité 2 dans le moule 1 du pneumatique, peut être situé dans n'importe quelle zone du moule. Par exemple, dans le cas où le module électronique 11 est prévu pour effectuer une fonction de mesure localisée ou une fonction liée à un système de génération d'énergie, la position est déterminée en fonction des paramètres physiques concernés. A titre d'exemple, un patch 10 peut être prévu dans un élément de sculpture pour une mesure d'adhérence ou d'efforts, à l'équateur pour un système de génération d'énergie de type piézo-électrique.

Dans le cas d'un système sans fonction de mesure, comme par exemple un support seul, ou une fonction autonome de type transmission de données par « RFID », la position du patch 10 est déterminée dans le but d'établir un bon compromis entre les sollicitations mécaniques du pneumatique en usage d'une part, et la simplicité d'accès dans le moule d'autre part.

### Numéros de référence employés sur les figures

- 1: Moule
- 2: Cavité
- 3: Contre-forme
- 4: Profil de moulage du support
- 5: Orifice de ventilation

- 10: Support (« Patch »)
- 11: Module électronique
- 12: Pneumatique
- 13: Membrane
- 14: Joint d'étanchéité
- 15: Aimant de contre-forme
- 16: Aimant de moule

## Revendications

1. Procédé de pose d'un support (10) en matériau élastomère comprenant au moins un module électronique (11) contre une paroi d'un pneumatique (12), comportant les étapes dans lesquelles :
i) une cavité (2) de moulage est prévue dans un moule (1) ;
ii) une contre-forme (3) comportant un profil (4) correspondant à celui du support à mouler est disposée dans la cavité de moulage, la contre-forme est agencée de façon amovible ;
iii) un support (10) non-vulcanisé est disposé dans ladite cavité (2) de moulage ;
iv) le support (10) non-vulcanisé est vulcanisé simultanément avec les autres éléments constituants le pneumatique (12).

2. Procédé de pose de support selon la revendication 1, dans lequel le support (10) non-vulcanisé est mis en forme directement dans la contre-forme (3).

3. Procédé de pose de support selon l'une des revendications 1 à 2, dans lequel le support (10) non-vulcanisé est partiellement réticulé préalablement à son insertion dans la cavité.

4. Procédé de pose de support selon l'une des revendications 1 à 3, dans lequel le support (10) non-vulcanisé est préformé préalablement à son insertion dans la cavité.

5. Procédé de pose de support selon l'une des revendications 1 à 4, dans lequel le support (10) non-vulcanisé est mis en forme par injection d'une composition élastomère.

6. Procédé de pose de support selon l'une des revendications 1 à 5 , dans lequel le support (10) non-vulcanisé est mis en forme par assemblage d'éléments partiellement réticulés d'une composition élastomère.

## Patentansprüche

1. Verfahren zur Anbringung einer Halterung (10) aus Elastomermaterial, die wenigstens ein Elektronikmodul (11) umfasst, an einer Wand eines Reifens (12), die Schritte aufweisend, in welchen:
i) ein Formhohlraum (2) in einem Formwerkzeug (1) vorgesehen wird;
ii) eine Gegenform (3), die ein Profil (4) aufweist, das demjenigen der zu formenden Halterung entspricht, in dem Formhohlraum angeordnet wird, wobei die Gegenform lösbar angebracht wird;
iii) eine nicht vulkanisierte Halterung (10) in dem Formhohlraum (2) angeordnet wird;
iv) die nicht vulkanisierte Halterung (10) gleichzeitig mit den anderen Bestandteilen des Reifens (12) vulkanisiert wird.

2. Verfahren zur Anbringung einer Halterung nach Anspruch 1, wobei die nicht vulkanisierte Halterung (10) direkt in der Gegenform (3) geformt wird.

3. Verfahren zur Anbringung einer Halterung nach einem der Ansprüche 1 bis 2, wobei die nicht vulkanisierte Halterung (10) vor ihrer Einfügung in den Hohlraum teilweise vernetzt wird.

4. Verfahren zur Anbringung einer Halterung nach einem der Ansprüche 1 bis 3, wobei die nicht vulkanisierte Halterung (10) vor ihrer Einfügung in den Hohlraum vorgeformt wird.

5. Verfahren zur Anbringung einer Halterung nach einem der Ansprüche 1 bis 4, wobei die nicht vulkanisierte Halterung (10) durch Einspritzen einer Elastomerzusammensetzung geformt wird.

6. Verfahren zur Anbringung einer Halterung nach einem der Ansprüche 1 bis 5, wobei die nicht vulkanisierte Halterung (10) durch Zusammenbau von teilweise vernetzten Elementen aus einer Elastomerzusammensetzung geformt wird.

## Claims

1. Method for installing a mounting (10) of elastomeric material having at least an electronic module (11) against a wall of a tyre (12), comprising steps in which:
i) a mould cavity (2) is provided in a mould (1);
ii) a counter-shape (3) having a profile (4) corresponding to that of the mounting to be moulded is placed in the mould cavity (2),the counter-shape (3) is arranged in a removable manner;
iii) an unvulcanized mounting (10) is placed in said mould cavity (2);
iv) the unvulcanized mounting (10) is vulcanized simultaneously with the other components of the tyre (12).

2. Method for installing a mounting according to Claim 1, wherein the unvulcanized mounting (10) is shaped directly in the counter-shape (3).

3. Method for installing a mounting according to any of Claims 1 to 2, wherein the unvulcanized mounting (10) is partially cured before its insertion into the cavity.

4. Method for installing a mounting according to any of Claims 1 to 3, wherein the unvulcanized mounting (10) is pre-formed before its insertion into the cavity.

5. Method for installing a mounting according to any of Claims 1 to 4, wherein the unvulcanized mounting (10) is shaped by the injection of an elastomeric composition.

6. Method for installing a mounting according to any of Claims 1 to 5, wherein the unvulcanized mounting (10) is shaped by the assembly of partially cured elements of an elastomeric composition.
